# DEMANDE DE BREVET EUROPEEN

(11) **EP 1 967 829 A1**
(43) Date de publication de la demande: **10.09.2008**
(21) Numéro de dépôt: 07300847.6
(22) Date de dépôt: 05.03.2007
(51) Int. Cl.: G01F 15/18

(54) **Compteur de fluide monté avec des tubes flexibles, extensibles et autoportants**

(71) Demandeur: Actaris S.A.S., 92100 Boulogne-Billancourt (FR)
(72) Inventeur: Chamosset, Jérôme, 71000 Macon (FR); Lerouge, Dominique, 71680 Crêches sur Saône (FR)
(74) Mandataire: Lenne, Laurence

(57) **Abrégé**

L'invention concerne une bâche de compteur de fluide, en particulier d'eau ou d'énergie thermique, comportant un corps de bâche (1) destiné à recevoir une chambre de mesure ou équivalent, cette bâche comportant au moins un tube flexible (2) dont une première extrémité (2A) est reliée hydrauliquement à ladite chambre de mesure et dont une seconde extrémité (2B) est destinée à être raccordée à une conduite d'arrivée ou d'évacuation de fluide au moyen d'un élément de raccordement (3) du tube destiné à coopérer avec un élément de raccordement porté par ladite conduite, caractérisée en ce que ledit tube (2) est autoportant et extensible.

## Description

L'invention concerne un compteur de fluide, en particulier d'eau ou d'énergie thermique.

Un tel compteur connu comprend une bâche constituée d'un corps en forme de fût par exemple, pourvu de deux tubulures rigides et de raccordements, une tubulure d'entrée destinée à être raccordée à une conduite d'arrivée, en général déjà fixée à demeure sur un bâtiment ou équivalent, et une tubulure de sortie destinée à être raccordée à une conduite de sortie, en général également déjà fixée à demeure sur un bâtiment ou équivalent. Cette bâche est destinée à recevoir la chambre de mesure d'un élément mesurant, qui peut être un élément mobile à turbine ou à piston oscillant, ou fixe, par ultrason par exemple.

Un compteur est décrit dans le brevet FR 1 098 300 qui concerne un agencement de montage d'un compteur d'eau monté à des endroits ou sur des machines exposés à de fortes trépidations.

La tubulure d'entrée de la bâche y est raccordée à l'aide d'un premier tronçon de tuyau flexible à une soupape de fermeture qui, à son tour, est en communication avec une conduite rigide. La tubulure de sortie de la bâche est également raccordée à second tronçon de tuyau flexible lui-même raccordé à la machine. Ces tronçons de tuyau flexibles peuvent être des tuyaux en caoutchouc ou des tuyaux métalliques.

Le compteur quant à lui est monté sur la machine à l'aide d'une assise élastique qui absorbe complètement les trépidations assurant le bon fonctionnement du compteur.

Ce type de montage de compteur est spécifiquement destiné au montage d'un compteur sur un dispositif soumis à de fortes trépidations, tel qu'un tambour malaxeur. II n'est en aucun cas adapté à un montage classique tel que précisé plus haut, avec conduites d'arrivée et d'évacuation montées à demeure sur un bâtiment ou équivalent. Elle nécessite en effet une fixation directe du compteur compte tenu de la flexibilité des tronçons de tuyaux, par exemple en caoutchouc.

Dans le cas d'un montage classique de compteur, dans un bâtiment ou équivalent, ce dernier est installé dans un environnement qui est propre à chaque installation et qui est en général partiellement décrit.

La vétusté de nombreuses installations, éventuellement abîmées, entraîne que les conditions diffèrent de la description faite dans les normes en ce qui concerne les connexions, les raccordements, les précisions, la présence éventuelle de corrosion.

De plus, les normes, qui précisent la distance entre conduites et la tolérance associée ainsi que le type de raccordement à ces conduites, manquent de précision et ne prennent pas en compte toutes les variations sur site. La description partielle des conditions environnementales ne répond pas à tous les cas de figure.

Les installations sont soumises à des contraintes dépendant de l'amont et de l'aval du compteur où peuvent advenir des évènements exceptionnels ou répétés impliquant des contraintes additionnelles sur le compteur.

Enfin, à l'heure actuelle, les matériaux utilisés pour la bâche et ses connexions aux conduites sont principalement des matériaux métalliques, comme par exemple du laiton, de la fonte ou de l'acier. Par leurs propriétés mécaniques, par leurs procédés d'obtention et par leur conception, les bâches actuelles utilisant ces matériaux résistent, avec une architecture telle que décrite ci-dessus, aux sollicitations induites à l'installation et à la durée de vie du compteur.

Les compteurs de demain ou peu utilisés à ce jour utilisent des matériaux n'ayant pas le même comportement, par exemple les matières plastiques et composites. Ces matériaux auront certes des caractéristiques initiales équivalentes aux matériaux utilisés actuellement mais leurs caractéristiques pourront évoluer dans le temps en fonction des conditions d'utilisation et de leur dégradation naturelle.

Ces conditions peuvent être physiques, par exemple contraintes liées à l'installation ou variations, répétées ou non, de pression lente et rapide jusqu'au coup de bélier, chimiques, par exemple hydrolyse ou attaque acide ou basique, environnementales, par exemple humidité relative ou profils de température, ou temporelles.

L'invention résout ces problèmes et, pour ce faire, elle propose une bâche de compteur de fluide, en particulier d'eau ou d'énergie thermique, comportant un corps de bâche destiné à recevoir une chambre de mesure d'un élément mesurant, cette bâche comportant au moins un tube flexible dont une première extrémité est reliée hydrauliquement à ladite chambre de mesure et dont une seconde extrémité est destinée à être raccordée à une conduite d'arrivée ou d'évacuation de fluide au moyen d'un élément de raccordement du tube destiné à coopérer avec un élément de raccordement porté par ladite conduite, caractérisé en ce que ledit tube est autoportant et extensible.

Par autoportant, il est ici entendu qui le tube assure en soi une stabilité et ne nécessite pas de fixation du compteur sur le bâtiment ou équivalent.

L'invention présente de nombreux avantages.

Les vibrations dans le compteur sont supprimées ou diminuées. Les vibrations sont absorbées partiellement ou complètement par le tronçon de tube flexible.

Le montage des installations difficiles est simplifié.

Les retours sur site pour résoudre un problème de fuite sont supprimés ou diminués.

Les contraintes sur le compteur lors de l'installation qui peuvent créer une fuite du compteur après installation et nécessiter le retour de l'installateur pour réparer la fuite, sont supprimées.

La compression du joint d'étanchéité disposé entre la bâche et la conduite d'arrivée ou d'évacuation d'eau est améliorée En effet, le tube flexible s'allonge avec la pression dans la conduite, ayant ainsi pour impact de comprimer plus le joint.

Les pics de pression réguliers venant de l'aval du compteur, provoqué par exemple par un robinet mitigeur, peuvent être absorbés par l'agencement conforme à l'invention.

Il en est de même des pics de pression accidentels exceptionnels venant de l'aval du compteur avec ou non une déformation visible.

Lors d'une phase de gel, le tube flexible peut faire office de zone absorbante soit par rupture, soit par déformation lors du gel, entraînant une fuite ou une déformation permanente visible après retour au-dessus de 0°C.

Selon un premier mode de réalisation préféré, ladite première extrémité du tube est directement reliée mécaniquement au dit corps de bâche.

Cette première extrémité du tube peut également être reliée mécaniquement directement à la chambre de mesure ou l'élément mesurant, le tube traversant le corps de bâche de façon étanche ou non, selon la technologie de mesure utilisée.

Selon un second mode de réalisation préféré, ladite première extrémité du tube est reliée mécaniquement à un tronçon de tubulure prolongeant ledit corps de bâche.

Ledit tronçon de tubulure peut être de forme courbe.

Ledit tronçon de tubulure peut être droit et être disposé en partie basse du dit corps.

De préférence, ledit corps de bâche est en matière plastique, éventuellement composite.

Et, ladite première extrémité du tube peut être surmoulée directement dans ledit corps ou ledit tronçon de tubulure.

Ledit élément de raccordement du tube peut également être en matière plastique et être surmoulé directement sur la seconde extrémité du dit tube.

Ledit élément de raccordement du tube comporte avantageusement un clapet anti-retour.

Et, ledit clapet peut être surmoulé dans ledit élément de raccordement.

De préférence, ledit élément de raccordement comporte sur sa face destinée à venir en butée avec ladite conduite ou une pièce solidaire de celle-ci, un joint d'étanchéité surmoulé dans ledit élément de raccordement.

Selon une première variante, ladite seconde extrémité du tube est usinée, de sorte à présenter au moins une forme d'ancrage de la matière plastique du dit élément de raccordement.

Selon une seconde variante, ladite seconde extrémité du tube est déformée emboutie, de sorte à présenter par déformation au moins une forme d'ancrage de la matière plastique du dit élément de raccordement.

De préférence, ledit tube flexible est destinée à être raccordée à une conduite d'évacuation de fluide.

La bâche peut comporter deux tubes flexibles, autoportants et extensibles, dont une première extrémité est reliée hydrauliquement à ladite chambre de mesure et dont une seconde extrémité est destinée à être raccordée pour l'un à une conduite d'arrivée et pour l'autre à une conduite d'évacuation de fluide.

L'invention concerne également un compteur de fluide, en particulier d'eau froide, chaude ou d'énergie thermique, comportant une telle bâche.

L'invention est décrite ci-après plus en détail à l'aide de figures ne représentant que des modes de réalisation préféré de l'invention.

Les figures 1A et 1B sont des vues en coupe et en perspective d'un premier mode de réalisation d'une bâche conforme à l'invention.

La figure 2A et 2B sont des vues en coupe et en perspective d'un deuxième mode de réalisation d'une bâche conforme à l'invention.

La figure 3A et 3B sont des vues en coupe et en perspective d'un troisième mode de réalisation d'une bâche conforme à l'invention.

Les figures 4A et 4B sont des vues en coupe et en perspective d'un quatrième mode de réalisation de l'invention.

Les figures 5A et 5B sont des vues en coupe et en perspective d'un cinquième mode de réalisation de l'invention.

Les figures 6A et 6B sont des vues en coupe et en perspective d'un sixième mode de réalisation de l'invention.

Les figures 7A et 7B sont des vues en coupe et en perspective de détail, d'un mode de constitution de l'invention.

Les figures 8A et 8B sont des vues en coupe et en perspective de détail, d'un autre mode de constitution de l'invention.

Les figures 9 à 12 sont des vues en coupe de détail de plusieurs variantes de réalisation de l'invention.

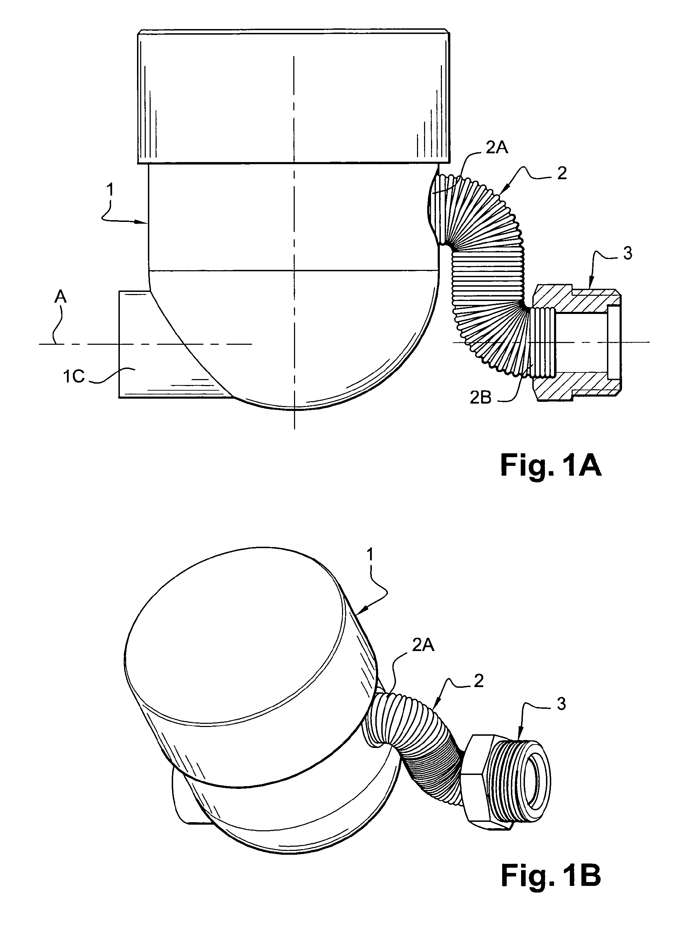

Une bâche de compteur de fluide, en particulier d'eau ou d'énergie thermique, selon l'invention est représentée sur les figures 1 à 6.

Elle comporte un corps de bâche 1, ici en forme de fût, destiné à recevoir une chambre de mesure d'un élément mesurant fixe ou mobile non représenté et au moins un tube flexible 2 dont une première extrémité 2A est reliée hydrauliquement à ladite chambre de mesure ou l'élément mesurant et dont une seconde extrémité 2B est destinée à être raccordée à une conduite d'arrivée ou d'évacuation de fluide au moyen d'un élément de raccordement du tube 3 destiné à coopérer avec un élément de raccordement à écrou porté par la conduite. Un tel élément est en général réalisé au moyen d'une bague de serrage, par exemple en alliage cuivreux, venant buter contre une bride de la conduite et vissé sur l'élément de raccordement 3 du tube. Pour des calibres plus importants, le mode de raccordement est défini par des brides qui sont normalisées.

Le corps de bâche, ici en forme de fût cylindrique fermé dans son bas, peut de façon connue en soi être de toute forme et de toute section.

Selon l'exemple représenté, le tube flexible 2 est disposé en aval de la bâche, vu le sens de l'écoulement d'eau. En d'autres termes, il est ici destiné à être raccordée à une conduite d'évacuation.

La bâche comporte ici, pour l'entrée de l'eau, un tronçon de tubulure d'entrée 1C connu, rigide et réalisé d'un pièce avec le corps 1 et diamétralement opposé au tube flexible 2.

Ce tronçon de tubulure rigide d'entrée 1C peut être remplacé par un autre agencement de tube flexible, identique à celui prévu pour la sortie de l'eau sur les figures.

Selon l'invention, ce tronçon de tube 3 est autoportant et extensible.

Il s'agit de préférence d'un élément tubulaire flexible et extensible tel que décrit dans le document de brevet EP 0 813 014. Un tel élément est métallique, de préférence en acier inoxydable, et sa forme en accordéon permet de le courber et de l'allonger facilement.

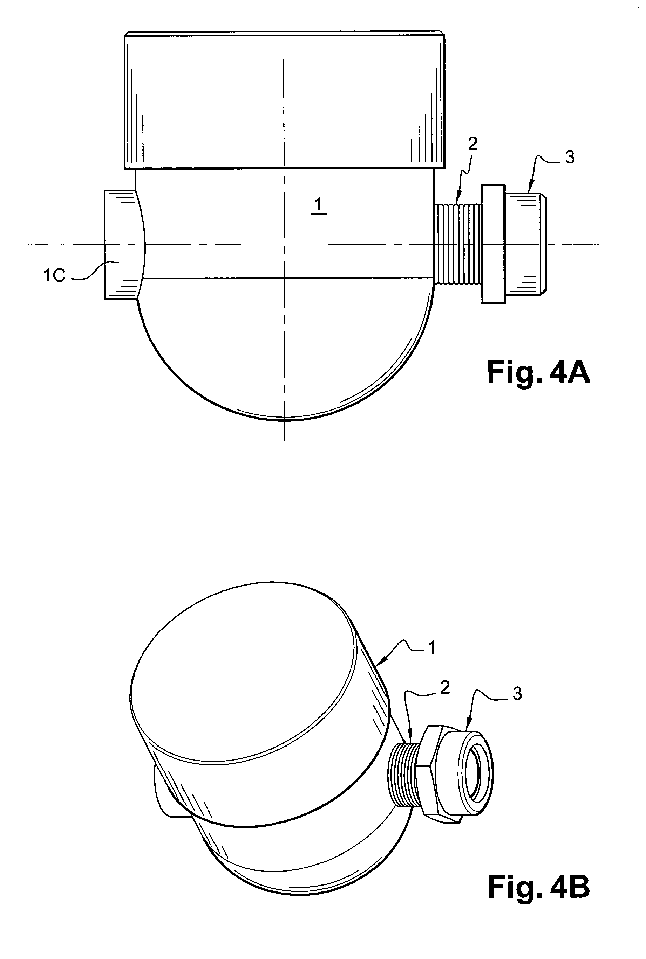

Sur les figures 1A et 1B, est représenté un premier mode de réalisation, où la première extrémité 2A du tube est directement reliée mécaniquement au corps 1 de bâche sensiblement à mi-hauteur de ce dernier, à titre d'exemple. C'est également le cas du mode de réalisation illustré sur les figures 4A et 4B.

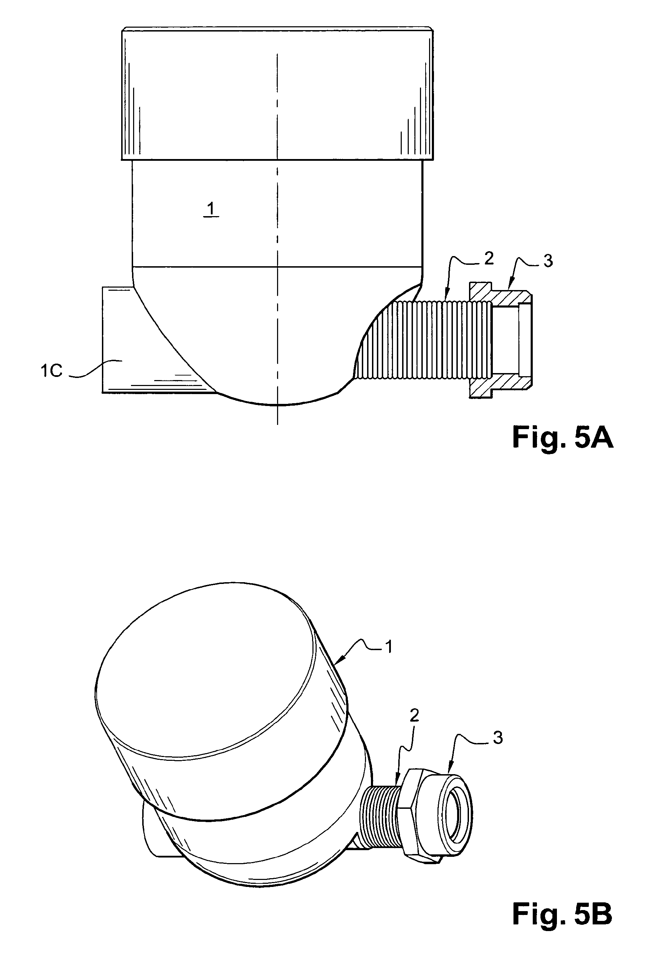

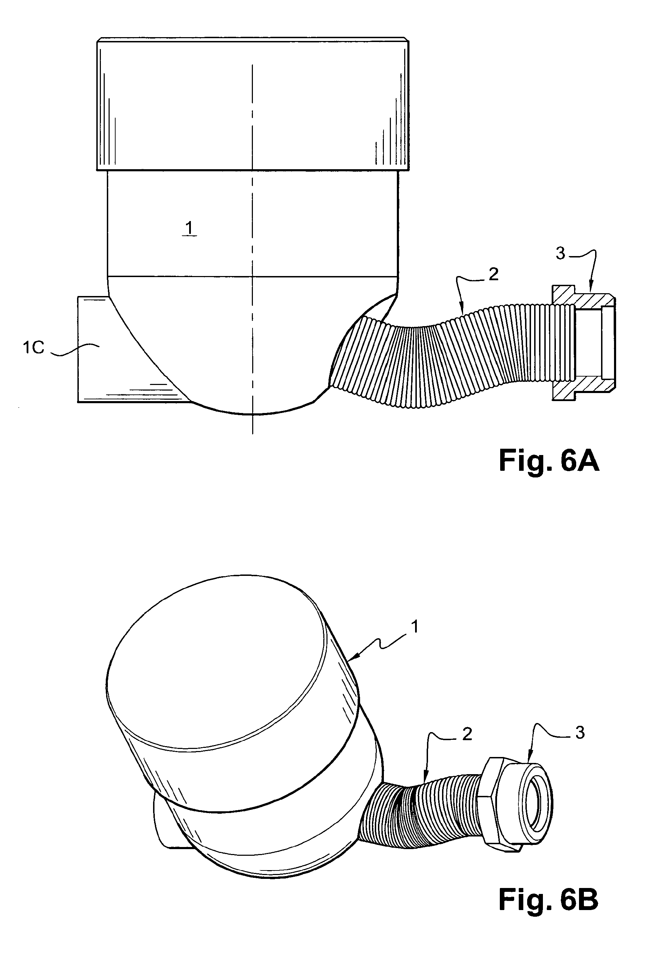

De façon générale, le tube peut être relié au corps 1 de la bâche ou de l'élément mesurant, à n'importe quelle hauteur de ce dernier, comme illustré sur les figures 5A, 5B, 6A et 6B. Cette hauteur dépend de la technologie de mesure utilisée et d'éventuelles normes nationales.

Selon un second mode de réalisation, la première extrémité du tube est reliée mécaniquement à un tronçon de tubulure prolongeant le corps de bâche.

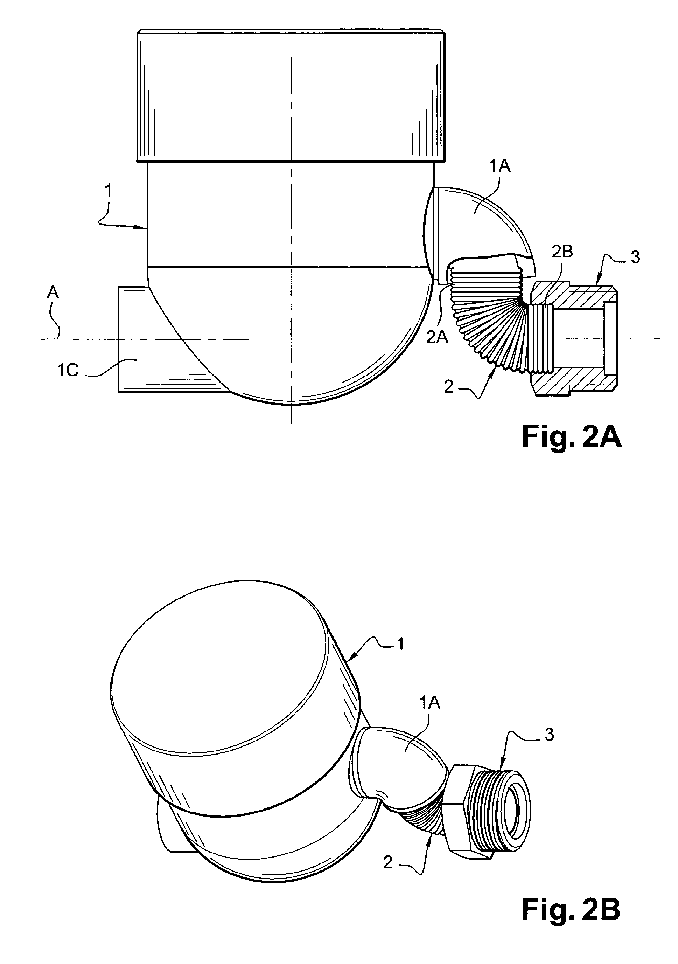

Ce tronçon de tubulure 1 A peut être de forme courbe, en quart de cercle, comme représenté sur les figures 2A et 2B et peut être solidaire du corps 1 de la bâche sensiblement à mi-hauteur de ce dernier.

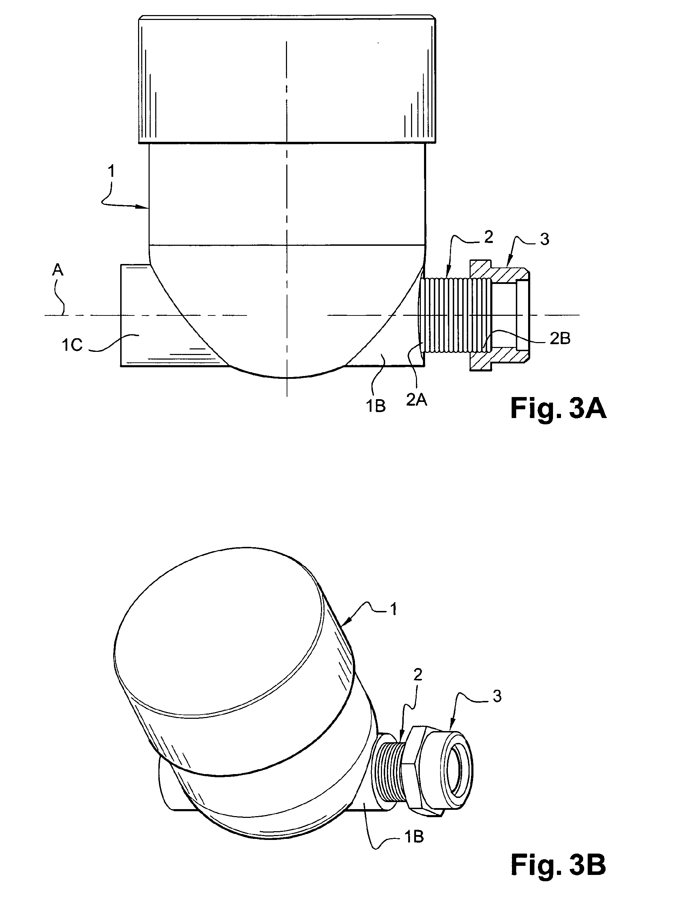

Ce tronçon de tubulure 1 B peut être droit, comme représenté sur les figures 3A et 3B, et être disposé en partie basse de la bâche, aligné avec le tronçon de tubulure d'entrée 1C.

Grâce à cet agencement de tube flexible, autoportant et extensible, il est aisé de compenser les écarts de positionnement entre l'axe longitudinal A du tronçon de tubulure d'entrée 1C et l'axe longitudinal de la conduite d'évacuation, qui sont théoriquement alignés.

Grâce à l'invention, il est possible de compenser une variation angulaire de +/- 60° entre ces deux axes, ainsi qu'un désalignement d'au moins 10 mm.

Il est également possible de compenser un écart allant jusqu'à +/- 50 mm entre la position théorique de l'élément de raccordement de la conduite et sa position réelle.

Un tube 2 conforme à l'invention permet toute installation. En effet, un tel tube long peut, grâce à sa flexibilité, être enroulé ou plié, si la distance entre le corps de bâche et la conduite est relativement petite. II peut être expansé par tirage, grâce à son extensibilité, si la distance entre le corps de bâche et la conduite est relativement grande.

Grâce à l'invention, il est possible de monter un compteur sur quelque axe que ce soit. A titre d'exemple, la figure 1 montre un axe de connexion A aligné avec l'axe de la tubulure d'entrée, mais la connexion peut être également orthogonale ou inclinée par rapport à cet axe suivant différents plans.

L'invention s'applique en particulier aux bâches en matière plastique ou composite et les modes de réalisation qui suivent s'appliquent spécifiquement à de tels corps de bâche.

A titre d'exemple, une telle bâche 1 peut être réalisée en matière thermoplastique telle que les polyamides (PA,PAA) les polyphtalamides (PPA), les polyphénylènes oxydes (PPO) ou les polysulfures de phénylène (PPS). Ces matières thermoplastiques peuvent être renforcées de fibre de verre ou d'autres adjuvants structurels ou thermiques.

Selon le mode de réalisation représenté sur les figures 1A et 1B, la première extrémité 2A du tube flexible est surmoulée directement dans le corps 1 de la bâche. Il en est de même pour les variantes représentées sur les figures 4A, 4B, 5A et 5B.

Selon les modes de réalisation représentés sur les figures 2A, 2B, 3A et 3B, cette première extrémité 2A est surmoulée directement dans le tronçon de tubulure 1 A, 1 B.

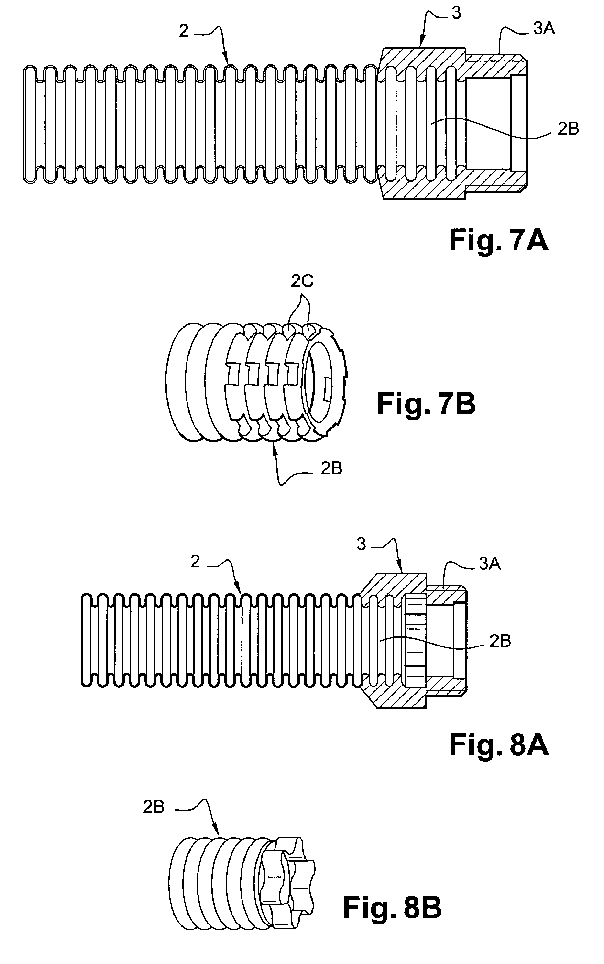

Quant à l'élément de raccordement 3 du tube, il est avantageusement également en matière plastique, comme illustré précisément sur les figures 7 à 12. Cependant il peut également être en matière métallique pour des applications souhaitées.

Cet élément de raccordement 3 du tube est surmoulé directement sur la seconde extrémité 2B du tube, comme visible sur les figures 7 et 8.

De façon générale, pour réaliser le surmoulage d'une extrémité du tube 2, un certain nombre de spires de ce tube 2 en accordéon sont surmoulées dans la matière plastique.

Afin d'améliorer l'accrochage et l'ancrage de la matière plastique, cette seconde extrémité 2B du tube peut être usinée, comme illustré sur la figure 7B, de sorte à présenter des formes d'ancrage 2C de la matière plastique de l'élément de raccordement. Ces agencements d'ancrage garantissent la tenue en traction, en rotation et en cisaillement.

Cette seconde extrémité 2B du tube peut également être emboutie, comme illustré sur la figure 8B, de sorte à présenter des formes, obtenues par déformation saillantes et/ou en creux, d'ancrage de la matière plastique de l'élément de raccordement.

L'élément de raccordement 3 comporte sur sa face externe un filetage 3A destiné à venir en prise avec l'écrou de l'élément de raccordement à écrou classique porté par la conduite de sortie.

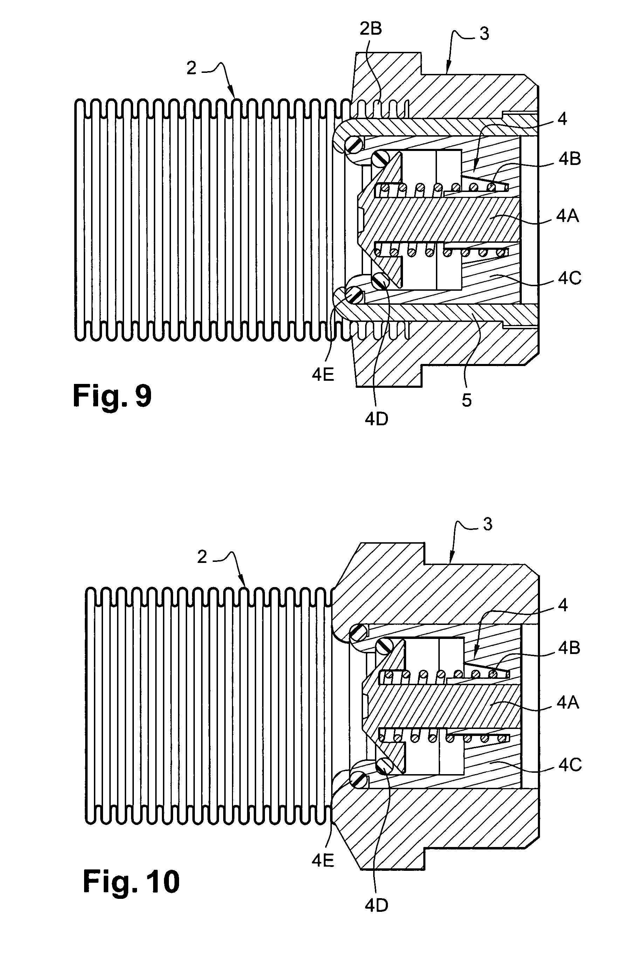

L'élément de raccordement 3 du tube peut comporter avantageusement un clapet anti-retour, comme représenté sur les figures 9 et 10.

Le clapet 4 peut être disposé dans un douille 5 et être monté, éventuellement par surmoulage, dans l'alésage de l'élément de raccordement 3, comme illustré sur la figure 9, ou peut être surmoulé directement dans l'élément de raccordement 3, comme illustré sur la figure 10.

Ce clapet 4 comporte un piston 4A sollicité par un ressort de compression 4B dans un fourreau 4C et comporte un joint d'étanchéité 4D au niveau du siège du piston. Il comporte également un joint d'étanchéité externe 4E disposé à la périphérie externe du fourreau 4C

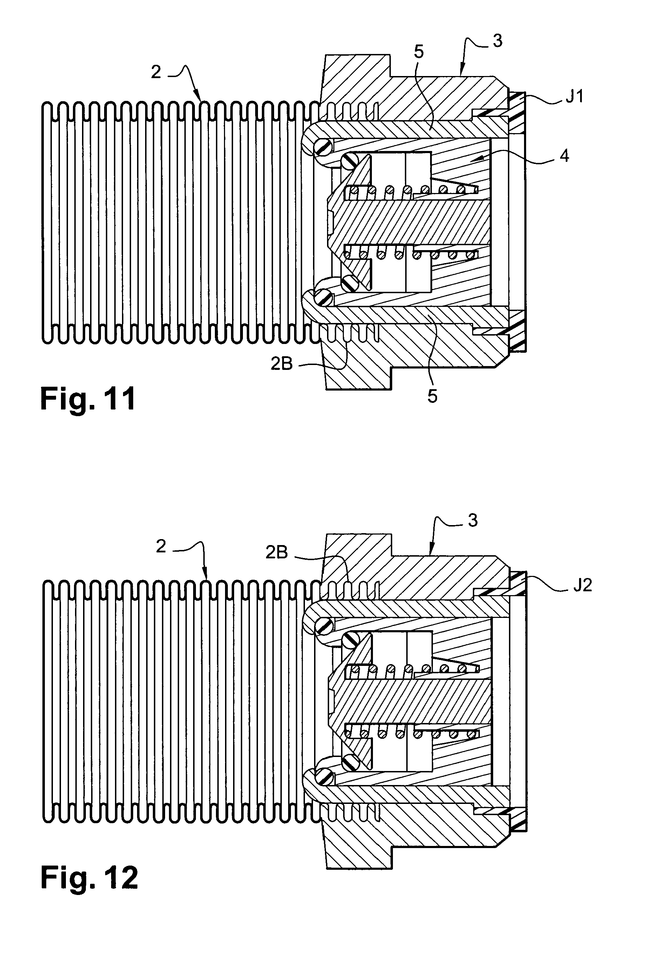

En plus de cet agencement de clapet 4, il est prévu selon le mode de réalisation représenté sur les figures 11 et 12, un joint d'étanchéité surmoulé J1 ou J2 sur la face de l'élément de raccordement 3 destinée à venir en butée avec la conduite ou une pièce solidaire de celle-ci, le surmoulage étant alors bi matière sur la seconde extrémité 2B du tube et la douille 5 pourvue de son clapet 4.

Selon le mode de réalisation représenté sur la figure 11, ce joint d'étanchéité J est de section en Té et, selon le mode de réalisation représenté sur la figure 12, il est de section en L. Une branche de ce joint est surmoulé le long de la douille 5 et est ainsi ancré après surmoulage total, sur la face de l'élément de raccordement 3.

Le joint surmoulé peut être en matière thermoplastique par exemple en polyoxydeméthylène (POM), en acrylonitrile-butadiène-styrène (ABS), en polyamide (PA) ou en polyéthylène basse ou haute densité. De préférence, la matière pour le joint est moins dure que celle de la bâche. Cette souplesse relative permet au joint de mieux assurer l'étanchéité.

Le joint peut également être injecté et être constitué de silicone ou d'élastomère tel que les EPDM ou les caoutchouc de nitrile butadiène.

## Revendications

1. Bâche de compteur de fluide, en particulier d'eau ou d'énergie thermique, comportant un corps de bâche (1) destiné à recevoir une chambre de mesure ou équivalent, cette bâche comportant au moins un tube flexible (2) dont une première extrémité (2A) est reliée hydrauliquement à ladite chambre de mesure et dont une seconde extrémité (2B) est destinée à être raccordée à une conduite d'arrivée ou d'évacuation de fluide au moyen d'un élément de raccordement (3) du tube destiné à coopérer avec un élément de raccordement porté par ladite conduite, **caractérisée en ce que** ledit tube (2) est autoportant et extensible.

2. Bâche selon la revendication 1, **caractérisée en ce que** ladite première extrémité (2A) du tube est directement reliée mécaniquement au dit corps (1) de bâche.

3. Bâche selon la revendication 1, **caractérisée en ce que** ladite première extrémité (2A) du tube est reliée mécaniquement à un tronçon de tubulure (1 A, 1 B) prolongeant ledit corps (1) de bâche.

4. Bâche selon la revendication précédente, **caractérisée en ce que** ledit tronçon de tubulure est de forme courbe (1A).

5. Bâche selon la revendication 3, **caractérisée en ce que** ledit tronçon de tubulure (1 B) est droit et est disposé en partie basse du dit corps (1).

6. Bâche selon l'une des revendications précédentes, **caractérisée en ce que** ledit corps de bâche est en matière plastique, éventuellement composite.

7. Bâche selon la revendication 6 et l'une des revendications 2 à 5, **caractérisée en ce que** ladite première extrémité (2A) du tube est surmoulée directement dans ledit corps (1) ou ledit tronçon de tubulure (1 A, 1 B).

8. Bâche selon la revendication 6 ou 7, **caractérisée en ce que** ledit élément de raccordement (3) du tube est en matière plastique et est surmoulé directement sur la seconde extrémité (2B) du dit tube

9. Bâche selon la revendication précédente, **caractérisée en ce que** ledit élément de raccordement (3) du tube comporte un clapet anti-retour (4).

10. Bâche selon la revendication précédente, **caractérisée en ce que** ledit clapet (4) est surmoulé dans ledit élément de raccordement (3).

11. Bâche selon l'une des revendications 6 à 10, **caractérisée en ce que** ledit élément de raccordement (3) comporte sur sa face destinée à venir en butée avec ladite conduite ou une pièce solidaire de celle-ci, un joint d'étanchéité (J1, J2) surmoulé dans ledit élément de raccordement.

12. Bâche selon l'une des revendications 6 à 11, **caractérisée en ce que** ladite seconde extrémité (2B) du tube est usinée, de sorte à présenter au moins une forme d'ancrage (2C) de la matière plastique du dit élément de raccordement (3).

13. Bâche selon l'une des revendications 6 à 11, **caractérisée en ce que** ladite seconde extrémité (2B) du tube est déformée emboutie, de sorte à présenter au moins une forme d'ancrage de la matière plastique du dit élément de raccordement (3).

14. Bâche selon l'une des revendications précédentes, **caractérisé en ce que** ledit tube flexible (2) est destinée à être raccordée à une conduite d'évacuation de fluide.

15. Bâche selon l'une des revendications précédentes, **caractérisée en ce qu'**elle comporte deux tubes flexibles, autoportants et extensibles, dont une première extrémité est reliée hydrauliquement à ladite chambre de mesure et dont une seconde extrémité est destinée à être raccordée pour l'un à une conduite d'arrivée et pour l'autre à une conduite d'évacuation de fluide.

16. Compteur de fluide, en particulier d'eau ou d'énergie thermique, comportant une bâche selon l'une des revendications précédentes.

## Revendications modifiées

### Revendications modifiées conformément à la règle 137(2) CBE.

**1.** Bâche de compteur de fluide, en particulier d'eau ou d'énergie thermique, comportant un corps de bâche (1) destiné à recevoir une chambre de mesure ou équivalent, cette bâche comportant au moins un tube flexible et autoportant (2) dont une première extrémité (2A) est reliée hydrauliquement à ladite chambre de mesure et dont une seconde extrémité (2B) est destinée à être raccordée à une conduite d'arrivée ou d'évacuation de fluide au moyen d'un élément de raccordement (3) du tube destiné à coopérer avec un élément de raccordement porté par ladite conduite, **caractérisée en ce que** ledit corps de bâche est en matière plastique, ledit tube (2) est extensible et sa première extrémité (2A) est surmoulée directement dans ledit corps (1) ou un tronçon de tubulure (1A, 1B) prolongeant ledit corps (1) de bâche.

**2.** Bâche selon la revendication précédente, **caractérisée en ce que** ledit tronçon de tubulure est de forme courbe (1A).

**3.** Bâche selon la revendication 1, **caractérisée en ce que** ledit tronçon de tubulure (1 B) est droit et est disposé en partie basse du dit corps (1).

**4.** Bâche selon la revendication précédentes, **caractérisée en ce que** ledit élément de raccordement (3) du tube est en matière plastique et est surmoulé directement sur la seconde extrémité (2B) du dit tube.

**5.** Bâche selon la revendication précédente, **caractérisée en ce que** ledit élément de raccordement (3) du tube comporte un clapet anti-retour (4).

**6.** Bâche selon la revendication précédente, **caractérisée en ce que** ledit clapet (4) est surmoulé dans ledit élément de raccordement (3).

**7.** Bâche selon l'une des revendications précédentes, **caractérisée en ce que** ledit élément de raccordement (3) comporte sur sa face destinée à venir en butée avec ladite conduite ou une pièce solidaire de celle-ci, un joint d'étanchéité (J1, J2) surmoulé dans ledit élément de raccordement.

**8.** Bâche selon l'une des revendications précédentes, **caractérisée en ce que** ladite seconde extrémité (2B) du tube est usinée, de sorte à présenter au moins une forme d'ancrage (2C) de la matière plastique du dit élément de raccordement (3).

**9.** Bâche selon l'une des revendications 1 à 7, **caractérisée en ce que** ladite seconde extrémité (2B) du tube est déformée emboutie, de sorte à présenter au moins une forme d'ancrage de la matière plastique du dit élément de raccordement (3).

**10.** Bâche selon l'une des revendications précédentes, **caractérisé en ce que** ledit tube flexible (2) est destinée à être raccordée à une conduite d'évacuation de fluide.

**11.** Bâche selon l'une des revendications précédentes, **caractérisée en ce qu'**elle comporte deux tubes flexibles, autoportants et extensibles, dont une première extrémité est reliée hydrauliquement à ladite chambre de mesure et dont une seconde extrémité est destinée à être raccordée pour l'un à une conduite d'arrivée et pour l'autre à une conduite d'évacuation de fluide.

**12.** Compteur de fluide, en particulier d'eau ou d'énergie thermique, comportant une bâche selon l'une des revendications précédentes.
